# EUROPEAN PATENT APPLICATION

(11) **EP 3 954 586 A1**
(43) Date of publication of application: **16.02.2022**
(21) Application number: 20190912.4
(22) Date of filing: 13.08.2020
(51) Int. Cl.: B60R 19/18, B60R 19/02, B60R 19/48

(54) **VEHICLE FRONT END**

(71) Applicant: VOLKSWAGEN AG, 38440 Wolfsburg (DE); SAIC Volkswagen Automotive Co. Ltd., Shanghai 201805 (CN)
(72) Inventor: Ippoliti, Mario, 38444 Wolfsburg (DE); Zacharias, Norman, 38489 Jübar (DE); Gu, Minghao, Jiading District, Shanghai City 201802 (CN); Schulz, Reiner, 38446 Wolfsburg (DE); Tang, Hongyun, Jiading District, Shanghai City 201801 (CN)
(74) Representative: Freischem & Partner Patentanwälte mbB

(57) **Abstract**

The invention relates to a vehicle front end comprising at least one body shell element, at least one pedestrian protection cross member and at least one inner front end part, said inner front end part being positioned above said pedestrian protection cross member. The object of the invention is to provide a vehicle front end (10) comprising at least one body shell element (20), at least one pedestrian protection cross member (22) and at least one inner front end part (32) allowing a constant clearance between two adjacent body shell elements (20) and/or to prevent the body shell element (20) from bending while keeping the additional costs and the additional weight low. A vehicle front end (10) according to the invention comprises at least one body shell element (20), at least one pedestrian protection cross member (22) and at least one inner front end part (32), said inner front end part (32) being positioned above said pedestrian protection cross member (22) and rearward the body shell element (20), wherein at least one supporting structure (42) having an extension in the vehicle vertical direction is arranged between the body shell element (20) and the pedestrian protection cross member (22) in order to reduce or prevent the body shell element (20) from bending or lowering

## Description

The invention relates to a vehicle front end comprising at least one body shell element, at least one pedestrian protection cross member and at least one inner front end part, said inner front end part being positioned above said pedestrian protection cross member. "Vehicle front end" means an arrangement of several parts in the front part of a vehicle including at least one body shell element. It is explicitly referred to motor vehicles comprising at least one front bumper cover and/or at least one radiator grill and/or at least one front spoiler as a body shell element.

The invention relates in particular to vehicle front ends for motor vehicles such as cars or motor trucks, e.g. vehicles with combustion engines, with electric engines and/or with other power trains including hybrid power trains.

A pedestrian protection cross member in the sense of the invention in particular refers to an element having a width in the vehicle transverse direction, said width being at least half of the total vehicle width, preferably more than 60 percent, more than 70 percent or even more than 75 percent of the total vehicle width, said total vehicle width meaning the maximum vehicle width without the exterior mirror(s). Optionally, the pedestrian protection cross member is formed as a high-strength and stiff structure, such as a cross beam with a u-shaped cross-section, wherein the opening of the "u" is directed in the vehicle longitudinal direction to the vehicle front or to the vehicle rear.

Many vehicles have a main cross member being connected to two longitudinal beams extending rearward from the rear end of the main cross member in vehicle longitudinal direction. The pedestrian protection cross member is positioned lower than the main cross member. Optionally, the pedestrian protection cross member may be directly connected to the main cross member by one, two or more vertical connection elements, in particular connection beams.

A general problem of body shell elements is the desire of a constant clearance between two adjacent body shell elements and the desire to prevent body shell elements from bending, in particular body shell elements with a huge extent, e.g. a significant width, such as a width of more than 50 cm, more than 80 cm or more than 100 cm.

The object of the invention is to provide a vehicle front end comprising at least one body shell element, at least one pedestrian protection cross member and at least one inner front end part allowing a constant clearance between two adjacent body shell elements and/or to prevent the body shell element from bending while keeping the additional costs and the additional weight low.

The object is solved by the features of the independent claims. Further useful embodiments and advantages of the invention are described in connection with the dependent claims.

A vehicle front end according to the invention comprises at least one body shell element, at least one pedestrian protection cross member and at least one inner front end part, said inner front end part being positioned above said pedestrian protection cross member and rearward the body shell element, wherein at least one supporting structure having an extension in the vehicle vertical direction is arranged between the body shell element and the pedestrian protection cross member in order to reduce or prevent the body shell element from bending, in particular bending downward, or lowering. Thus, the inventive vehicle front end comprises an arrangement allowing to reduce or prevent the body shell element from bending of lowering by providing and arranging a supporting structure in an advantageous and functional way, thus keeping the additional costs and the additional weight for the vehicle front end low. This applies in particular, if the front end and the supporting structure are configured as outlined in detail in the following.

In a preferred embodiment of a vehicle front end according to the invention, the supporting structure is made from an elastic material and/or the supporting structure extends in the vehicle vertical direction such that the supporting structure is in contact with the body shell element and/or with the pedestrian protection cross member. However, the supporting structure may also be made from any other material, in particular from non-elastic material, preferably if the construction allows the supporting structure to collapse and/or disappear in the vehicle longitudinal direction in case of a front crash, in particular with a pedestrian. Preferably, the supporting structure allows an elastic deformation and/or a collapsibility of at least 10 mm in the vehicle longitudinal direction, preferably at least 20 mm and most preferred at least 30 mm. This may be achieve by a soft and elastic material and/or by an elastic sealing lip allowing at least a part of the sealing together with the supporting structure to move away, in particular to turn up or down in order to move rearward in the vehicle longitudinal direction.

An elastic material means in particular a material having a coefficient of elasticity of less than 5 GPa, more preferably less than 1 GPa and even more preferably less than 0,5 GPa or less than 0,1 GPa. As a preferred example of an elastic material, it is particularly referred to polymer material, e.g. thermoplastic material and/or a elastomer material. It is explicitly referred to plastic material like PP/EPDM.

If the supporting structure extends in the vehicle vertical direction such that the supporting structure is in contact with the body shell element and/or with the pedestrian protection cross member, a maximum support an none or almost none bending of the body shell element is to be expected depending on the elasticity and an optional pre-load of the supporting structure.

According to a solution that may be carried out with almost no additional costs and only little additional weight the supporting structure is at least one local vertical protrusion extending downwards at a front section of the inner front end part. In this case, the supporting structure may in particular be one separate element being attached to a surface directed to the ground, i.e. directed downward in the vehicle vertical direction.

The invention was made in particular for vehicles with a vehicle front end, wherein the inner front end part is an air guiding structure having a length and a width (significantly) exceeding the height. More particularly, it is referred to air guiding structures forming a bottom element in the form of a closed planar structure, preferably an air guiding structure forming an essentially horizontal wall, e.g. a bottom wall of an air channel leading to a mounting support for a radiator module and/or to a radiator module. An air guiding structure is preferably made of a plastic material.

In another preferred embodiment of the invention, the supporting structure is attached to or the supporting structure is part of a front section of the inner front end part, wherein the supporting structure and/or the front section of the inner front end part are made from an elastic material. In case the support structure and the front section of the inner front end part are both made from an elastic material an appropriate geometric structure of the elastic material allows achieving a seal effect, achieving a geometric structure being able to collapse in case of longitudinal forces such as forces appearing in a front crash situation, in particular with a pedestrian, and achieving a geometric structure being able to take up supporting forces in a vertical vehicle direction, in particular supporting forces from a body shell element to be transferred to the pedestrian protection cross member.

Further advantages in respect of the production costs occur, if the supporting structure of the inventive vehicle front end is formed in one piece with a front section of the inner front end part and/or the supporting structure is attached to a sealing lip. Preferably, the supporting structure is formed in one piece and is attached to a sealing lip of the inner front end part. In this case, the supporting structure may be produced from the same material as the sealing lip at the same time as the sealing lip. Preferably the sealing lip has a longer extent in the vehicle longitudinal direction, because the remaining part of the sealing lip without supporting structure allows and improves the collapsibility in the vehicle longitudinal direction.

In another preferred embodiment of the invention, the supporting structure of the vehicle front end comprises at least one supporting block having an extension in a vehicle transverse direction and in the vehicle longitudinal direction. Such a supporting block may have an extension being adapted to the width in the vehicle transverse direction and/or to the length in the vehicle longitudinal direction of the pedestrian protection cross member, in particular an upper surface of said pedestrian protection cross member.

In another preferred embodiment of the invention the vehicle front end comprises several supporting structures being distanced to each other in the vehicle transverse direction. This embodiment is cost and weight optimized, as said embodiment requires less material.

In another even more weight optimized and more functional embodiment, the supporting structure(s) of the vehicle front end comprise(s) several supporting ribs. This means that at least one supporting structure is formed by several, preferably parallel ribs. It is possible that the ribs are stand-alone ribs being distanced to each other and each rib itself forms a supporting structure. Alternatively, several ribs may be arranged to a supporting block, wherein one or more supporting blocks and/or one or more stand-alone ribs may be provided depending from the forces to be taken up in the vehicle vertical direction.

Finally, it is referred to an embodiment of the vehicle front end, wherein the inner front end part extends in the vehicle longitudinal direction from the body shell element to a radiator mounting support for radiator modules. The invention was made in particular for such vehicle front ends and can be carried out in a notably cost-efficient manner if an inner front end part is part of the inventive vehicle front end. In particular, it is referred to inner front end parts being an air guiding structure forming a bottom wall of an air channel leading to a radiator module.

Further useful embodiments of the invention are described in the following in connection with the figures.

It shows:
- Fig. 1: an isometric view of a vehicle front end,
- Fig. 2: a cross-sectional view according to II-II in figure 1,
- Fig. 3: a first embodiment of an inner front end part in form of an air guiding structure with several supporting structures in a bottom view and
- Fig. 4: a second embodiment of an inner front end part in form of an air guiding structure with one supporting structure in a bottom view.

In the figures and in the following the X-direction (referring to the arrow X) means the vehicle longitudinal direction, the Y-direction (referring to the arrow Y) means the vehicle transverse direction and the Z-direction (referring to the arrow Z) means the vehicle vertical direction (not shown).

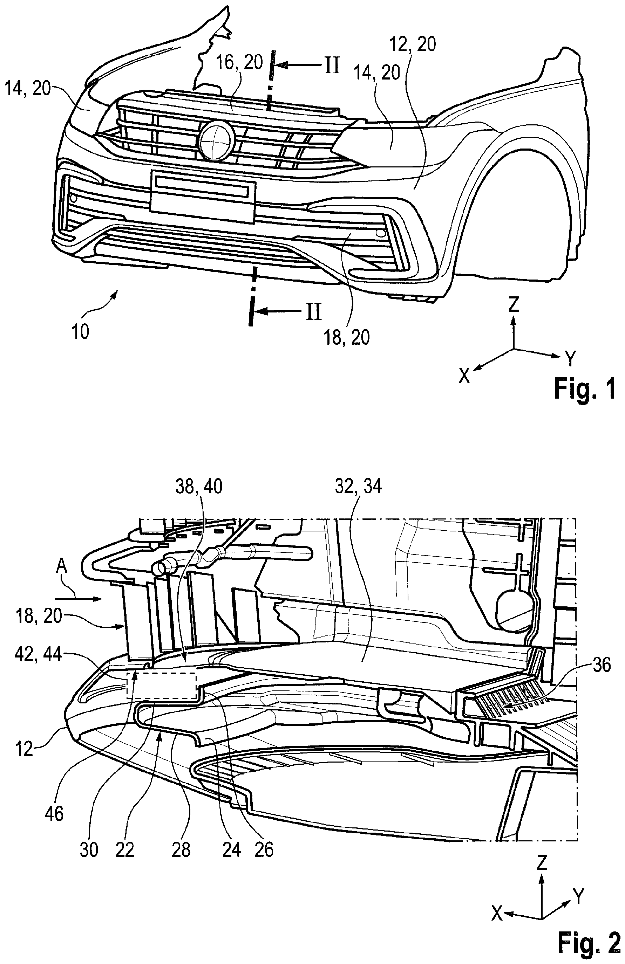

Figure 1 shows a vehicle front end 10 comprising a front bumper cover 12, headlight 14, an upper grille 16 and a lower grille 18, all aforementioned elements being body shell elements 20.

As shown in figure 2, the front bumper cover 12 extends in vehicle vertical direction to a pedestrian protection cross member 22, said pedestrian protection cross member 22 having a u-shaped cross-section. In this embodiment the opening of the "u" is directed in the vehicle longitudinal direction to the vehicle rear. Furthermore, the pedestrian protection cross member 22 comprises a lower flange 24 at the rear and of the horizontal lower leg 28 and an upper flange 26 at the rear end of the horizontal upper leg 30.

Above the pedestrian protection cross member 22 and rearward the front bumper cover 12 the vehicle front end 10 comprises an inner front end part 32 in the form of an air guiding structure 34. Said air guiding structure 34 extends in the vehicle transverse direction (X-direction) from the front bumper cover 12 to a radiator mounting support 36 for a radiator module (not shown). As can be seen in figure 2, the air guiding structure 34 extends significantly in the vehicle longitudinal and in the vehicle transverse direction. The air guiding structure 34 has a closed surface and serves as a lower wall for an air channel leading air from the vehicle front in the direction of the arrow A in figure 2 to a radiator module (not shown).

A front section 38 of the air guiding structure 34 is formed as a sealing lip 40. Said sealing lip 40 is formed in one piece with a supporting structure 42, wherein the supporting structure 42 is only shown as an exemplary supporting block 44 in figure 2. The supporting structure 42 extends in the vehicle vertical direction downward to the upper leg 30 of the pedestrian protection cross member 22. In the vehicle longitudinal direction, the supporting structure 42 extends over the complete length of the upper leg 30. Furthermore, the supporting structure 42 extends in the vehicle vertical direction and in the vehicle longitudinal direction to a supported section of the front bumper cover 12. Thus, forces directed in the vehicle vertical direction, such as the weight of the bumper cover 12, are supported by the supporting structure 42. In consequence, the bumper cover 12 is prevented from bending and is appropriately supported.

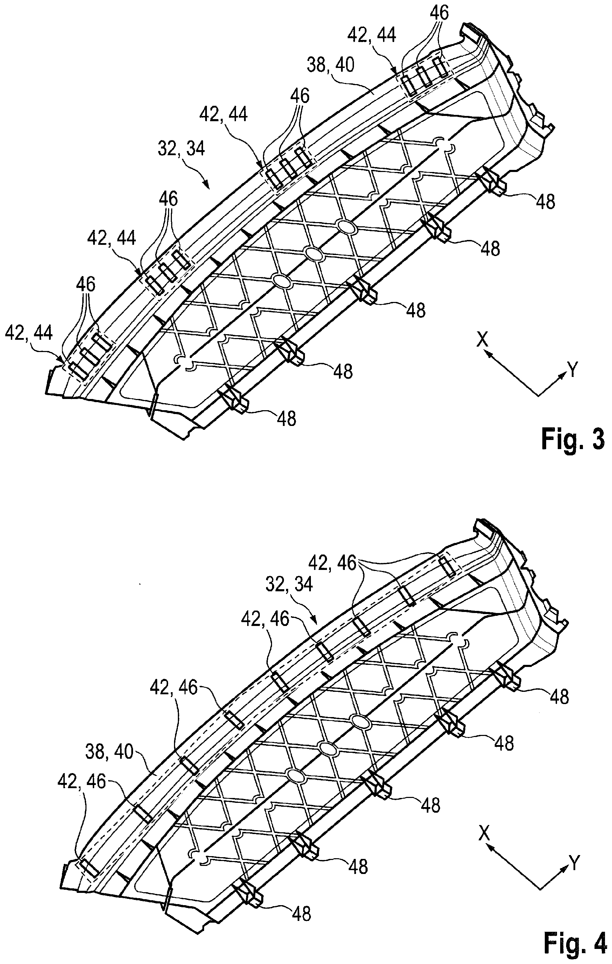

Figures 3 and 4 show two different and preferred embodiments of an inner front end part 32 in the form of an air guiding structure 34.

In the embodiment of figure 3 the front section 38 of the air guiding structure 34 has a sealing lip 40 with four supporting blocks 44, each supporting block 44 comprising of three supporting ribs 46. The supporting ribs 46 extend in the vehicle longitudinal direction and are oriented parallel to each other. The length of the supporting ribs 46 is shorter than the extent of the sealing lip 40 thus allowing the sealing lip 40 including the supporting ribs 46 to collapse in X-direction in case of a front crash, in particular if pedestrian is involved. Thus, the existence of the supporting ribs 46 is irrelevant in case of a front crash and thus does not interfere with the pedestrian protection function of the vehicle front end 10, in particular the area around the pedestrian protection cross member 22.

If a load is applied on the bumper cover 12 in a vertical direction downward, the bumper cover 12 is supported by the supporting structure 42, because the supporting structure 42 supports on the upper leg 30 of the pedestrian protection cross member 22. Thus, the inventive construction of the air guiding structure 34 helps to prevent the body shell element 20, namely the bumper cover 12, from bending and thus allows a constant clearance between two adjacent body shell elements 20, in particular between the bumper cover 12 and adjacent body shell elements 20 such as the lover grille 18.

In the embodiment of figure 4 the front section 38 of the air guiding structure 34 has a sealing lip 40 with nine supporting structures 42 formed as nine single supporting ribs 46, all ribs 46 being oriented parallel to each other and being distanced from each other. The distance from one rib 46 to an adjacent rib 46 is about 10 cm.

For the sake of completeness, it is referred to the coupling elements 48 at the rear end of the air guiding structures 34 allowing an easy connecting and mounting from the air guiding structure 34 to the radiator mounting support 36.

The features of the invention disclosed in the present specification, in the drawings, as well as in the claims may be essential both individually and in any combinations for the realization of the invention in its various embodiments. The invention is not limited to the described embodiments. They can be varied within the scope of the claims and taking into account the knowledge of the competent expert.

In particular it is referred to the options that a supporting block of ribs (not shown) extending to at least half of the width of the inner front end part may be provided in one piece with an inner front end part, in particular with an air guiding structure or, alternatively, supporting structures are produced separately and are positioned in order to reduce or prevent the body shell element from bending or lowering. As an example, it is referred to the option that a foam material is adhered to the inner front end part and/or to the passenger protection cross member and/or to the body shell element, in particular in a way as shown in figure 2, thus in a way to support forces applied to the body shell element downward in a vertical direction by the passenger protection cross member.

Instead of the ribs 46 as shown in the figures 3 and 4, the supporting structure may also be a solid block having a supporting surface extending significantly above the width of the pedestrian protection cross member and/or the width of the inner front end part.

### Reference numbers

- 10: vehicle front end
- 12: front bumper cover
- 14: headlight
- 16: upper grille
- 18: lower grille
- 20: body shell element
- 22: pedestrian protection cross member
- 24: lower flange
- 26: upper flange
- 28: lower leg
- 30: upper leg
- 32: inner front end part
- 34: air guiding structure
- 36: radiator mounting support
- 38: front section
- 40: sealing lip
- 42: supporting structure
- 44: supporting block
- 46: supporting rib
- 48: coupling element

## Claims

1. Vehicle front end comprising at least one body shell element (20), at least one pedestrian protection cross member (22) and at least one inner front end part (32), said inner front end part (32) being positioned above said pedestrian protection cross member (22) and rearward the body shell element (20), **characterized in** at least one supporting structure (42) having an extension in the vehicle vertical direction is arranged between the body shell element (20) and the pedestrian protection cross member (22) in order to reduce or prevent the body shell element (20) from bending or lowering.

2. Vehicle front end according to the preceding claim, **characterized in that** the supporting structure (42) is made from an elastic material and/or extends in the vehicle vertical direction such that the supporting structure (42) is in contact with the body shell element (20) and/or with the pedestrian protection cross member (22).

3. Vehicle front end according to one of the preceding claims, **characterized in** the supporting structure (42) is at least one local vertical protusion extending downwards at a front section of the inner front end part (32).

4. Vehicle front end according to one of the preceding claims, **characterized in that** the inner front end part (32) is an air guiding structure (34) having a length and a width (significantly) exceeding the height.

5. Vehicle front end according to one of the preceding claims, **characterized in that** the supporting structure (42) is attached to or is part of a front section (38) of the inner front end part (32), wherein the supporting structure (42) and/or the front section (38) of the inner front end part (32) are made from an elastic material.

6. Vehicle front end according to one of the preceding claims, **characterized in that** the supporting structure (42) is formed in one piece with a front section (38) of the inner front end part (32) and/or the supporting structure (42) is attached to a sealing lip (40).

7. Vehicle front end according to one of the preceding claims, **characterized in that** the supporting structure (42) comprises at least one supporting block (44) having an extension in a vehicle transverse direction and in the vehicle longitudial direction.

8. Vehicle front end according to one of the preceding claims, **characterized in that** several supporting structures (42) are provided and are positioned distanced to each other in the vehicle transverse direction.

9. Vehicle front end according to one of the preceding claims, **characterized in that** the supporting structure (42) comprises several supporting ribs (46).

10. Vehicle front end according to one of the preceding claims, **characterized in that** the inner front end part (32) extends in the vehicle longitudinal direction from the body shell element (20) to a radiator mounting support (36) for radiator modules.
